# EUROPEAN PATENT APPLICATION

(11) **EP 1 359 733 A1**
(43) Date of publication of application: **05.11.2003**
(21) Application number: 02360133.9
(22) Date of filing: 29.04.2002
(51) Int. Cl.: H04M 1/67

(54) **Telecommunication device with a conditional locking mechanism. Method for locking and unlocking such a device**

(71) Applicant: ALCATEL, 75008 Paris (FR)
(72) Inventor: The designation of the inventor has not yet been filed
(74) Representative: Rausch, Gabriele, Dr.

(57) **Abstract**

The present invention concerns a telecommunications device allocated to one or several user(s) and comprising a locking or use restricting mechanism, characterized in that said device (1) also comprises a local radiocommunication interface (3) controlling, directly or indirectly, said mechanism (2), wherein said mechanism (2) is normally set, latched or active and wherein said mechanism (2) is inactive, unlatched or desactived when, and as long as, its local radiocommunication interface (3) can locate and/or identify, within its transmission range, a wireless or cordless communication terminal (4) equipped with a corresponding local radiocommunication interface (5) and belonging to the or one of the allocated user(s).

## Description

The present invention is related to telecommunications devices, more particularly to the restricted use of such devices, for example for security or economical reasons.

The present invention concerns a telecommunications device with conditional locking features and a method for locking and unlocking such a device.

Under certain circumstances, it can be necessary or convenient to be able to lock or restrict the use of telecommunications devices, such as for example corded phones, especially when said device is accessible to a plurality of potential users.

Various solutions exist already which are able to fulfill this function.

Nevertheless, these existing solutions do all sollicitate the users by requesting a manual action, mostly switching on the lock by pressing a button and disabling the lock by typing a code on a keyboard.

Therefore, these existing solutions are not easy to use and are not reliable.

Indeed, users can easily forget to lock the telecommunications devices when they leave the place where said devices are installed (room, office, building, ...) and also to unlock them, after return, when trying to establish a communication.

Furthermore, there is also a great risk that the user forgets the code needed to unlock its device.

The main purpose of this invention is to overcome the aforementioned drawbacks.

Therefore, the present invention concerns a telecommunications device allocated to one or several user(s) and comprising a locking or use restricting mechanism, characterized in that said device also comprises a local radiocommunication interface controlling, directly or indirectly, said mechanism, wherein said mechanism is normally set, latched or active and wherein said mechanism is inactive, unlatched or desactived when, and as long as, its local radiocommunication interface can locate and/or identify, within its transmission range, a wireless or cordless communication terminal equipped with a corresponding local radiocommunication interface and belonging to the or one of the allocated user(s).

So, the basic idea of this invention consists in using local radiocommunication transmission to locate the concerned user, i.e. to know whether or not he/she is in the office or room in which the telecommunication device installed.

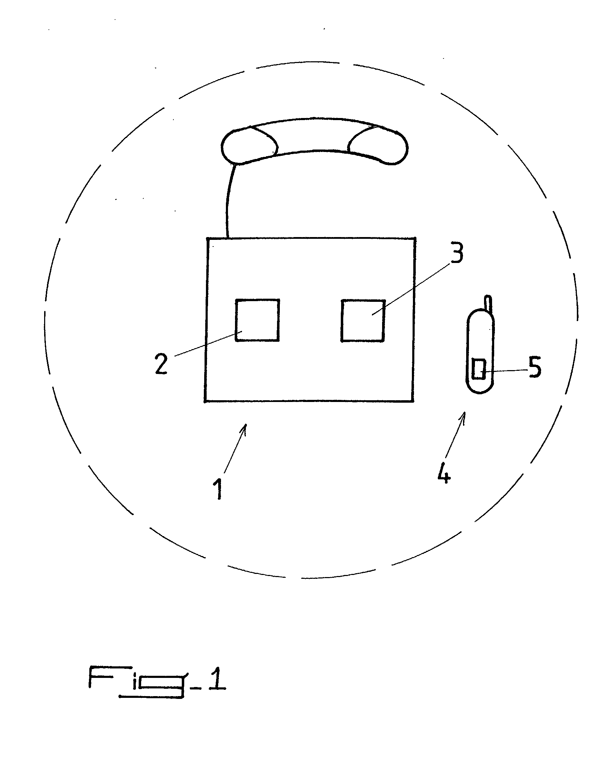

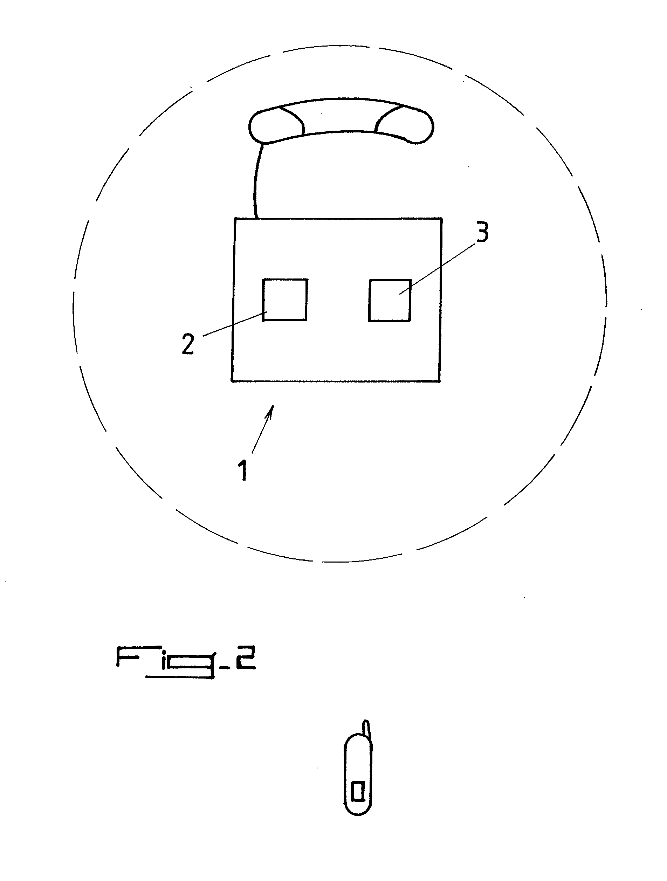

This invention will be better understood thanks to the drawings on which figure 1 illustrates schematically a situation where the telecommunications device (corded phone) is unlocked and figure 2 illustrates schematically a situation where said device is locked.

As show on the figures 1 and 2, the telecommunications device 1 comprises a locking or use restricting mechanism 2 and also a local radiocommunication interface 3 controlling, directly or indirectly, said mechanism 2, wherein said mechanism 2 is normally set, latched or active and wherein said mechanism 2 is inactive, unlatched or desactived when, and as long as, its local radiocommunication interface 3 can locate and/or identify, within its transmission range, a wireless or cordless communication terminal 4 equipped with a corresponding local radiocommunication interface 5 and belonging to the or one of the allocated user(s).

The interface 3 of the telecommunications device 1 can comprise a logical circuit which delivers a signal able to unlock the mechanism 2. Alternatively, the exit signal of the interface 3 can be transmitted to the microprocessor circuit of the device 1, which then exits a conditional control signal able to unlock said mechanism 2, and to keep it unlocked as long as the condition of presence is fulfilled..

In a preferred embodiment of the invention, and as shown in the figures 1 and 2, said device 1 consists of a corded phone with an embedded local radiocommunication interface 3 and said wireless or cordless communication terminal 4 is a mobile or cellular phone.

Advantageously, the local radiocommunication interfaces 3 and 5 are of the so-called Bluetooth type, which are well known in the state of the art.

The locking or restricting mechanism 2 can be a hardware component or circuit, a software component or a mixed component composed of associated hardware and software parts.

Moreover, said mechanism 2 can provide an all or nothing function or a more staggered response.

Such mechanisms 2 are well known to the skilled person.

In its locked state, the phone 1 or similar telecommunication terminal only accepts the input of a password (the access to the local menu is forbidden).

If the terminal 1 has a display device, a message or a pictogramm informs the user that the locking is active.

Alternatively, or in addition, said locked state can be indicated by an oral message in the earpiece of the phone.

The allocated user can customize the communication and service restrictions of its terminal 1, which will be effective when he/she is out of range or out of the office or room.

Thus, he/she can programm that:
- all incoming and outgoing calls are forbidden;
- all outgoing calls only are forbidden (the incoming calls will be displayed on the terminal);
- only internal calls to the PABX are allowed;
- only local or regional outgoing calls are allowed;
- automatical switch to the user's voice mail.

Thus, said locking mechanism 2, when active, can disable all functions of said telecommunications device 1 or only certain functions of said telecommunications device 1.

The present invention also concerns a method for, at least partially, locking and unlocking a telecommunications device, allocated to one or several user(s) and comprising a locking or use restricting mechanism, as described before.

Thus, this method is characterized in that said telecommunications device 1 is at least partially locked or restricted in its use when its local radiocommunication interface 3 does not locate the considered user or any of the considered users by way of his or their portable communication terminal 4 and in that said telecommunications device 1 is, at least partially, unlocked or functionally available when, and as long as, said local radiocommunication interface 3 can locate, and possibly identify, the or a authorised user.

According to the invention, the telecommunications device 1 can be fully available when the or an authorised user is identified or the degree of availability of the telecommunications device's 1 functions can depend on the identity or quality identified user(s).

Thanks to the invention, there is provided a real seamless lock control, that improves security and does not require any positive action from the user.

The present invention is, of course, not limited to the preferred embodiments described herein, changes can be made or equivalents used without departing from the scope of the invention.

## Claims

1. Telecommunications device allocated to one or several user(s) and comprising a locking or use restricting mechanism, **characterized in that** said device (1) also comprises a local radiocommunication interface (3) controlling, directly or indirectly, said mechanism (2), wherein said mechanism (2) is normally set, latched or active and wherein said mechanism (2) is inactive, unlatched or desactived when, and as long as, its local radiocommunication interface (3) can locate and/or identify, within its transmission range, a wireless or cordless communication terminal (4) equipped with a corresponding local radiocommunication interface (5) and belonging to the or one of the allocated user(s).

2. Telecommunications device according to claim 1, **characterized in that** said device (1) consists of a corded phone with an embedded local radiocommunication interface (3).

3. Telecommunications device according to anyone of claims 1 and 2, **characterized in that** said wireless or cordless communication terminal (4) is a mobile or cellular phone.

4. Telecommunications device according to anyone of claims 1 to 3, **characterized in that** said local radiocommunication interfaces (3 and 5) are of the so-called Bluetooth type.

5. Telecommunications device according to anyone of claims 1 to 4, **characterized in that** said locking mechanism (2), when active, disables all functions of said telecommunications device (1).

6. Telecommunications device according to anyone of claims 1 to 5, **characterized in that** said locking mechanism (2), when active, disables only certain functions of said telecommunications device (1).

7. Method for, at least partially, locking and unlocking a telecommunications device, allocated to one or several user(s) and comprising a locking or use restricting mechanism, according to anyone of claims 1 to 6, **characterized in that** said telecommunications device (1) is at least partially locked or restricted in its use when its local radiocommunication interface (3) does not locate the considered user or any of the considered users by way of his or their portable communication terminal (4) and **in that** said telecommunications device (1) is, at least partially, unlocked or functionally available when, and as long as, said local radiocommunication interface (3) can locate, and possibly identify, the or a authorised user.

8. Method according to claim 7, wherein the telecommunications device (1) is fully available when the or an authorised user is identified.

9. Method according to claim 7, wherein the degree of availability of the telecommunications device's (1) functions depends on the identity or quality identified user(s).
